# EUROPÄISCHE PATENTSCHRIFT

(11) **EP 0 536 673 B1**
(45) Veröffentlichungstag und Bekanntmachung des Hinweises auf die Patenterteilung: **08.01.1997**
(21) Anmeldenummer: 92116977.7
(22) Anmeldetag: 05.10.1992
(51) Int. Cl.: B29D 7/01, B29C 65/00, C08J 5/12, B29K 67/00

(54) **Transparent verklebte Folie aus Polyester**
Fluid transparent polyester film
Feuille transparente collée en polyester

(30) Priorität: 10.10.1991 DE 4133627
(43) Veröffentlichungstag der Anmeldung: 14.04.1993
(73) Patentinhaber: HOECHST AKTIENGESELLSCHAFT, 65926 Frankfurt am Main (DE)
(72) Erfinder: Schäfer, Helmut, W-6090 Rüsselsheim (DE); Buttkus, Erwin, W-6229 Walluf (DE)

(56) Entgegenhaltungen:
- EP-A- 0 210 646
- EP-A- 0 408 016
- FR-A- 1 549 625
- US-A- 3 905 854
- CHEMICAL ABSTRACTS, vol. 71, 1969, Columbus, Ohio, US; abstract no. 31087d, SH. L. SHARIPOV 'Thermal resistance welding of a polyethylene terephthalate film with a solvent' Seite 36; Spalte L; & TR. UFIM. AVIATS. INST. Nr. 11, 1968, Seiten 109 - 114
- DATABASE WPIL Week 8241, Derwent Publications Ltd., London, GB; AN 82-87132E & JP-A-57 144 721 (C. I. KASEI) 7. September 1982

## Beschreibung

Die Erfindung betrifft transparent verklebte Polyesterfolien, die unter anderem als Rundumetiketten verwendet werden, wobei die Transparenz der Klebezone auch unter Wärmeeinwirkung und in feuchter Atmosphäre erhalten bleibt.

Die Erfindung betrifft außerdem ein Verfahren zur Herstellung eines mit einer Behälterausstattung auf Folienbasis versehenen Behälters, sowie die Verwendung einer Polyesterfolie und einen mit einer Behälterausstattung auf Folienbasis versehenen Behälter.

Es ist bekannt, bestimmte Kunststoffolien in transparenter Form zu bedrucken und mittels eines Klebers zu Schläuchen oder dergleichen zu verkleben, ohne dabei Einbußen in der Transparenz in der verklebten Überlappungszone der Folien hinnehmen zu müssen.

Solche Folienschläuche werden unter anderem als Rundumetiketten, Sicherheitsverschlüsse oder Kapseln zur werbewirksamen Ausstattung von Behältern, wie Flaschen, Tuben, Gläser, etc. verwendet.

Folien auf Basis von Polyvinylchlorid (PVC), Polystyrol (PS) und Polypropylen (PP) sind für diesen Zweck gut geeignet, da sie sich gut verkleben lassen und auch die Verklebungszonen sauber und vor allem transparent sind und somit die optische Wirkung eines verklebten 360°-Rundumetiketts nicht negativ beeinflussen.

Am Markt setzen sich derzeit immer mehr Behälter aus Polyester durch, da diese hinsichtlich der Umweltbelastung weniger Probleme aufwerfen. Solche Behälter auf Polyesterbasis lassen sich zwar problemlos mit den oben genannten Behälterausstattungen auf Folienbasis aus PVC, PS oder PP versehen, allerdings bringt dies den Nachteil mit sich, daß diese ausgestatteten Polyesterbehälter nicht mehr sortenrein sind, d.h. nicht mehr aus einem einzigen Rohstoff bestehen und somit praktisch nicht mehr recycliert werden können.

Es bestand also das Bedürfnis, für diesen Zweck auch Polyesterfolien einzusetzen, die hinsichtlich ihrer Eignung als Behälterausstattung den Folien aus PVC, PS oder PP in nichts nachstehen, die sich insbesondere verkleben lassen unter Beibehaltung der Transparenz in der Verklebungszone.

Dies war bisher nicht möglich, da sich transparente Polyesterfolien bisher nur unter deutlich optisch sichtbaren Eintrübungen durch Kristallisationsschlieren verkleben ließen.

Verklebungen von eingefärbten, nicht transparenten Polyesterfolien für Anwendungen ohne hohe optische Ansprüche sind zwar bekannt, reichen jedoch für die Anwendung als Ausstattungs- und Dekorationsmaterial nicht aus. Eine solche Thermoschrumpffolie aus Polyester ist beispielsweise beschrieben in der EP-A-0 210 646.

Aufgabe der vorliegenden Erfindung war es daher, eine Möglichkeit zu finden, die es gestattet, transparente Polyesterfolien mit Klebern fest zu verbinden unter Beibehaltung der Transparenz in der verklebten Folienzone. Es war weiterhin Aufgabe der Erfindung, diese Verklebung so durchzuführen, daß auch bei einer nachfolgenden Wärmebehandlung, z.B. Schrumpfen oder Pasteurisieren, die Transparenz in der Verklebungszone erhalten bleibt.

Diese Aufgabe wird gelöst durch die Polyesterfolie gemäß Anspruch 1, durch das Verfahren gemäß Anspruch 10, durch die Verwendung einer Polyesterfolie gemäß Anspruch 11 und durch den mit einer Behälterausstattung auf Folienbasis versehenen Behälter gemäß Anspruch 12.
Zweckmäßige Weiterbildungen der Erfindung sind in den abhängigen Ansprüchen beschrieben.

Die erfindungsgemäße Polyesterfolie ist bevorzugt eine Polyethylenterephthalat-Folie (PET-Folie), d.h. sie besteht überwiegend, d.h. zu über 90 %, aus PET und kann in üblichem Ausmaß, d.h. bis zu 10 %, übliche Additive wie Stabilisatoren, Gleitmittel, Antistatika oder dergleichen enthalten.

Bevorzugt werden reaktivgruppenmodifizierte Polyesterfolien eingesetzt, die endständige reaktive Gruppen wie OH-, CHO- oder COOH-Gruppen aufweisen. Als besonders geeignet haben sich alkandiolmodifizierte PET-Folien erwiesen, wie 1,3-Propandiol- oder ethylenglykolmodifizierte PET-Folien. Solche Folien sind beispielsweise unter der Bezeichnung ^{(R)}PETCLEARYL (Fa. Hagner, Dornstätten, DE) oder VILLPET PETG-Folien Typ 1003 (Fa. Stäger, Muri, CH) erhältlich.

Die Polyesterfolien können ein- oder mehrschichtig sein; sie können unverstreckt, monoaxial oder auch biaxial verstreckt sein; sie können bedruckt oder unbedruckt sein.

Als Lösemittelkleber werden bevorzugt solche eingesetzt, die eine Affinität zu dem auf der Polyesterfolienoberfläche befindlichen, reaktiven Gruppen aufweisen. Weiterhin sollten diese Kleber keine wesentliche Kristallisation des angelösten Polyesters bewirken. Als besonders geeignet haben sich Lösemittel aus der Gruppe Ester, Alkohole, Ketone, Furane, chlorinierte Kohlenwasserstoffe und aliphatische und cyclische Kohlenwasserstoffe und Mischungen dieser Stoffe untereinander erwiesen. Als Ester können beispielsweise eingesetzt werden Essigsäureethylester oder -methylester; als Alkohole Ethanol oder Propanol; als Ketone Ethylmethylketone, Cyclohexan oder Aceton; als Furane Tetrahydrofuran oder niederalkylsubstituiertes THF; als chlorierte Kohlenwasserstoffe Methylenchlorid oder 2,2-dichlorethan; als aliphatische und cyclische Kohlenwasserstoffe Pentan, Hexan oder Cyclohexan.

Überraschenderweise hat sich gezeigt, daß sich die reaktivgruppenmodifizierten Polyesterfolien und hier insbesondere die alkandiolmodifizierten PET-Folien mit Lösemittelklebern dauerhaft und unter Beibehaltung der Transparenz der Klebestelle verkleben lassen. Selbst unter Wärmeeinwirkung, wie sie beim Aufschrumpfen solcher Folien auf Behälter angewendet wird, bleiben die Verklebungsstellen transparent. Außerordentlich überraschend war, daß auch in einer feuchten warmen Atmosphäre, wie sie beispielsweise beim Pasteurisieren auftritt, keine Veränderung der Transparenz eintritt.

Unter Transparenz soll hierbei gemeint sein, daß sich keine Trübungen, beispielsweise aufgrund von Kristallisationserscheinungen, einstellen. Die Transparenz kann beispielsweise mittels Streulichtmessung gemessen beziehungsweise beurteilt werden (ASTM-D 1003-61, Methode A). Bei den erfindungsgemäß verklebten Polyesterfolien liegt die Transparenz im Bereich von 75 bis 90 %, bevorzugt im Bereich von 80 bis 90 % (gemessen nach ASTM-D 1003-61, Methode A).

Bei der Rundumetikettierung geht man am besten so vor, daß man einen entsprechend bemessenen, gegebenenfalls bedruckten Polyesterfolienstreifen um den zu etikettierenden Behälter, beispielsweise eine Flasche, so herumlegt, daß die beiden Folienenden sich etwas überlappen. Die Überlappungszone beträgt im allgemeinen 1 bis 10 mm, bevorzugt 3 bis 7 mm. In dieser Überlappungszone wird der Lösemittelkleber ein- oder beidseitig auf die Folienoberfläche aufgetragen und die Nahtstelle nach Ablüften des Klebers unter Druck- und gegebenenfalls Temperaturanwendung geschlossen. In einer weiteren Ausgestaltung des Verfahrens wird zunächst eine Schlauchhülle gebildet, indem die Folie hohlzylinder-oder gegebenenfalls -kegelstumpfförmig mit überlappender Nahtstelle geformt und verklebt wird. Diese Schlauchhülle wird dann um den Behälter gestülpt. Anschließend wird das Rundumetikett durch Wärmeeinwirkung, beispielsweise durch Heißluft, auf den Behälter aufgeschrumpft.

Der Behälter kann aus beliebigem Material wie Glas, Metall oder Kunststoff wie PVC, PS oder PP, bevorzugt jedoch ebenfalls aus Polyethylenterephthalat, bestehen.

Im Folgenden wird die Erfindung anhand von Beispielen erläutert:

### Beispiel 1

Eine einschichtige, monoaxial in Querrichtung orientierte PET-Folie (PET-CLEARYL, P100; Fa. Hagner, Dornstätten, DE) wurde zu einem Schlauch mit einer Überlappungsnaht von 3 mm geformt. Die Nahtstelle wurde einseitig mit THF bestrichen und nach einer Abluftzeit von 1 bis 5 sec zusammengepreßt. Nach dem Austrocknen wies die Klebestelle eine Transparenz von 80 % auf (ASTM-D 1003-61, Methode A).

### Beispiel 2

Die zu einem Schlauch geformte und verklebte PET-Folie aus Beispiel 1 wurde in einem Heißluftstrom auf eine zylindrische Flasche aufgeschrumpft. Die Temperatur der Heißluft betrug 120 bis 130 °C (bezogen auf eine Durchlaufzeit von 4 sec). Auch nach diesem Schrumpfprozeß war die verklebte Nahtstelle transparent (80 % nach ASTM-D 1003-61, Methode A).

## Patentansprüche

1. Polyesterfolie mit endständigen reaktiven Gruppen, die durch eine Umsetzung mit einem Alkandiol modifiziert sind, mit einer hitzebeständigen transparenten Zone einer Klebenaht, in der sich die Folie teilweise überlappt und im Überlappungsbereich durch einen Kleber verbunden ist, der eine Affinität zu den modifizierten Gruppen aufweist.

2. Polyesterfolie nach Anspruch 1, welche eine Polyesterschrumpffolie ist.

3. Polyesterfolie nach Anspruch 1 oder 2, welche unverstreckt, monoaxial oder biaxial verstreckt ist.

4. Polyesterfolie nach einem oder mehreren der Ansprüche 1 bis 3, welche im wesentlichen aus Polyethylenterephthalat besteht.

5. Polyesterfolie nach einem oder mehreren der Ansprüche 1 bis 4, welche im Nahtbereich eine Transparenz im Bereich von 75 % bis 90 % aufweist.

6. Polyesterfolie nach einem oder mehreren der Ansprüche 1 bis 5, welche bedruckt ist.

7. Polyesterfolie nach einem oder mehreren der Ansprüche 1 bis 6, welche Schlauchform aufweist.

8. Polyesterfolie nach einem oder mehreren der Ansprüche 1 bis 7, wobei der Kleber ein Lösemittelkleber ist.

9. Polyesterfolie nach Anspruch 8, wobei der Lösemittelkleber ausgewählt wird aus einer oder mehreren Verbindungen der Gruppe bestehend aus Estern, Alkoholen, Ketonen, Furanen, chlorinierten Kohlenwasserstoffen und aliphatischen und cyclischen Kohlenwasserstoffen.

10. Verfahren zur Herstellung eines mit einer Behälterausstattung auf Folienbasis versehenen Behälters, wobei als Behälterausstattung auf Folienbasis eine Polyesterfolie um den Behälter gelegt und an einer Überlappungsnaht verklebt wird oder wobei eine schlauchförmige, eine verklebte Überlappungsnaht aufweisende Polyesterfolie über den Behälter gestülpt wird und anschließend die Behälterausstattung auf Folienbasis durch Wärmeeinwirkung auf den Behälter aufgeschrumpft wird, wobei die mittels Kleber verbundene Überlappung der Polyesterfolie transparent ist und die Polyesterfolie eine solche ist, die endständige reaktive Gruppen aufweist, die durch Umsetzung mit einem Alkandiol modifiziert sind.

11. Verwendung einer Polyesterfolie nach einem oder mehreren der Ansprüche 1 bis 9 als Rundumetikett, Sicherheitsverschluß oder Kapsel für Behälter.

12. Mit einer Behälterausstattung auf Folienbasis versehener Behälter, wobei die Behälterausstattung im wesentlichen aus einem Polyester besteht, der endständige reaktive Gruppen ausweist, die durch Umsetzung mit einem Alkandiol modifiziert sind und in einer Überlappungszone transparent verklebt ist.

13. Behälter nach Anspruch 12, welcher im wesentlichen aus Polyester besteht.

14. Behälter nach Anspruch 13, wobei der Polyester Polyethylenterephthalat ist.

## Claims

1. A polyester film possessing reactive terminal groups which are modified by reaction with an alkane diol, said film having a heat-resistant, transparent adhesive bond seam zone where the film forms a partial overlap and is bonded in said overlap zone by means of an adhesive exhibiting an affinity towards the modified groups.

2. The polyester film as claimed in claim 1, wherein said film is a polyester shrink film.

3. The polyester film as claimed in claim 1 or 2, wherein said film is unstretched or monoaxially or biaxially stretched.

4. The polyester film as claimed in one or more of claims 1 to 3, wherein said film is essentially composed of polyethylene terephthalate.

5. The polyester film as claimed in one or more of claims 1 to 4, wherein said film has a transparency in the range from 75 % to 90 % in the seam region.

6. The polyester film as claimed in one or more of claims 1 to 5, wherein said film is printed.

7. The polyester film as claimed in one or more of claims 1 to 6, wherein said film is in tubular form.

8. The polyester film as claimed in one or more of claims 1 to 7, wherein the adhesive is a solvent-based adhesive.

9. The polyester film as claimed in claim 8, wherein the solvent-based adhesive is selected from one or more compounds from the group comprising esters, alcohols, ketones, furans, chlorinated hydrocarbons and aliphatic and cyclic hydrocarbons.

10. A process for the production of a container provided with a film-based container finish, a polyester film, as a film-based container finish, being placed around the container and bonded at an overlap seam, or a tube-shaped polyester film having a bonded overlap seam being slipped over the container and the film-based container finish then being shrunk on to the container by the action of heat, the adhesive-bonded overlap of the polyester film being transparent and the polyester film being a polyester film possessing terminal reactive groups which are modified by reaction with an alkane diol.

11. The use of a polyester film as claimed in one or more of claims 1 to 9 as all-around label, safety seal or sheath for containers.

12. A container provided with a film-based container finish, wherein the container finish is essentially composed of a polyester possessing terminal reactive groups which are modified by reaction with an alkane diol, and is bonded in an overlap zone.

13. The container as claimed in claim 12, wherein said container is essentially composed of polyester.

14. The container as claimed in claim 13, wherein the polyester used is polyethylene terephthalate.

## Revendications

1. Feuille de polyester avec des groupes réactifs en bout de chaîne qui sont modifiés par une réaction avec un alcane diol, avec une zone collée transparente résistante à la chaleur, dans laquelle la feuille se recouvre partiellement et est fixé dans la zone de recouvrement au moyen d' une colle qui présente une affinité pour les groupes modifiés.

2. Feuille de polyester selon la revendication 1, qui est une feuille de polyester rétractable.

3. Feuille de polyester selon la revendication 1 ou 2, qui est non étirée, étirée monoaxialement ou biaxialement.

4. Feuille de polyester selon une ou plusieurs des revendications 1 à 3, qui est constituée essentiellement de polytéréphtalate d'éthylène.

5. Feuille de polyester seion une ou plusieurs des revendications 1 à 4, qui présente dans la zone de soudure une transparence dans la gamme de 75 à 90%.

6. Feuille de polyester selon une ou plusieurs des revendications 1 à 5, qui est imprimée.

7. Feuille de polyester selon une ou plusieurs des revendications 1 à 6, qui présente la forme d'un tuyau.

8. Feuille de polyester selon une ou plusieurs des revendications 1 à 7, caractérisée en ce que la colle est une colle à solvant.

9. Feuille de polyester selon la revendication 8, caractérisée en ce que la colle à solvant est choisie parmi un ou plusieurs composés du groupe constitué d'esters, d'alcools, de cétones, de furannes, d'hydrocarbures chlorés et d'hydrocarbures aliphatiques et cycliques.

10. Procédé de fabrication d'un récipient muni d'une décoration de récipient à base d'une feuille, caractérisé en ce que l'on place une feuille de polyester autour du récipient comme décoration de récipient a base d'une feuille et qu'on la colle sur une zone en recouvrement ou en ce que l'on met en fourreau sur le récipient une feuille de polyester présentant une zone en recouvrement collée, en forme de tuyau, que l'on rétreint ensuite sur le récipient la décoration de récipient à base d'une feuille par action de la chaleur, en ce que le recouvrement de la feuille de polyester fixée au moyen d'une colle est transparent et que la feuille de polyester est telle qu'elle présente des groupes réactifs en bout de chaîne qui sont modifiés par réaction avec un alcane diol.

11. Utilisation d'une feuille de polyester selon une ou plusieurs des revendications 1 à 9 comme étiquette enveloppante, comme fermeture de sécurité ou comme capsule pour récipients.

12. Récipient muni d'une décoration de récipient à base d'une feuille, caractérisé en ce que la décoration à base d'une feuille est constituée essentiellement d'un polyester qui présente des groupes réactifs en bout de chaîne qui sont modifiés par réaction avec un alcane diol et que ce polyester est collé de manière transparente dans une zone de recouvrement.

13. Récipient selon la revendication 12 qui est essentiellement constitué de polyester.

14. Récipient selon la revendication 13, caractérisé en ce que le polyester est du polytéréphtalate d'éthylène.
